# DEMANDE DE BREVET EUROPEEN

(11) **EP 1 624 560 A1**
(43) Date de publication de la demande: **08.02.2006**
(21) Numéro de dépôt: 05107175.1
(22) Date de dépôt: 04.08.2005
(51) Int. Cl.: H02M 3/158, H05B 33/08

(54) **Alimentation de plusieurs charges par un convertisseur continu-continu**

(30) Priorité: 06.08.2004 FR 0451801
(71) Demandeur: STMicroelectronics SA, 92120 Montrouge (FR)
(72) Inventeur: Florence, Arnaud, 37360, Saint Antoine du Rocher (FR); Heurtier, Jérôme, 37000, Tours (FR)
(74) Mandataire: de Beaumont, Michel

(57) **Abrégé**

L'invention concerne le partage d'un convertisseur de puissance entre plusieurs charges indépendantes (Q1, Q2), consistant à affecter à chacune des charges des créneaux périodiques d'alimentation pendant lesquels le convertisseur de puissance leur est respectivement dédié, la périodicité des créneaux étant choisie en fonction de la durée de rémanence desdites charges.

## Description

### Domaine de l'invention

La présente invention concerne le domaine des convertisseurs de puissance et, plus particulièrement, des convertisseurs continu-continu (DC-DC) de type alimentation à découpage. La présente invention s'applique à des convertisseurs élévateurs (step-up) ou abaisseurs (step-down) destinés à alimenter plusieurs charges indépendantes les unes des autres.

Les charges alimentées par le convertisseur de puissance peuvent être de natures différentes. Un exemple d'application concerne les écrans rétroéclairés du type de ceux utilisés dans les téléphones portables ou les assistants personnels (PDA). Plusieurs diodes électroluminescentes (généralement des diodes blanches) associées en série constituent les différentes charges. Selon l'intensité de rétroéclairage souhaité, l'une ou l'autre des charges est alimentée. Un autre exemple d'application concerne une fonction de variation de puissance effectuée par une alternance entre branches alimentées.

### Exposé de l'art antérieur

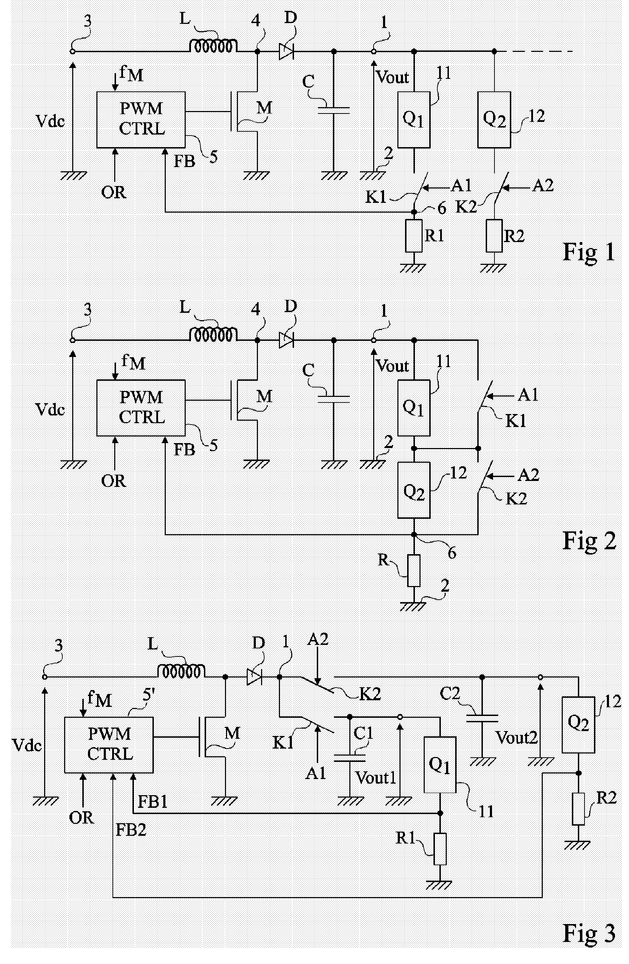

La figure 1 représente un premier exemple classique de convertisseur DC-DC d'alimentation de plusieurs charges indépendantes les unes des autres.

Il s'agit d'un convertisseur élévateur de tension destiné à fournir entre une borne 1 de sortie et la masse 2, une tension Vout plus élevée qu'une tension continu d'entrée Vdc appliquée entre une borne d'entrée 3 et la masse 2. Dans un convertisseur élévateur, les bornes 3 et 1 sont reliées l'une à l'autre par un élément inductif L en série avec une diode D, la cathode de la diode D étant reliée à la borne 1. La tension de sortie est prélevée aux bornes d'un condensateur C reliant la borne 1 à la masse. Un interrupteur M de découpage est connecté entre le point milieu 4 de l'association en série de l'inductance L et de la diode D et la masse. Cet interrupteur M est commandé par un circuit 5 (par exemple, PWM CTRL) chargé de fournir des impulsions de fermeture de l'interrupteur M en fonction d'une consigne (OR) et d'un signal FB d'asservissement. Le bloc 5 reçoit également un signal d'horloge f_{M} lui permettant de générer les impulsions de commande de l'interrupteur M. La commande effectuée par le circuit 5 sur les impulsions de commande peut être de type modulation de largeur d'impulsions (PWM), modulation de fréquence (FWM), etc.

Le convertisseur de puissance est destiné à alimenter plusieurs charges indépendantes. Dans l'exemple représenté en figure 1, deux charges 11 (Q1) et 12 (Q2) sont connectées à la borne 1. Chacune des charges est en série avec un interrupteur respectivement K1, K2 commandé par un signal A1, A2 afin de sélectionner la charge 11 ou 12 qui doit être alimentée par la tension Vout. Une résistance R1 ou R2, respectivement, relie l'interrupteur de chacune des charges à la masse 2.

Dans un convertisseur de puissance tel qu'illustré en figure 1, la régulation de la tension Vout ne s'effectue que sur l'une des charges. Dans cet exemple, le signal FB est prélevé au point 6 entre la charge 11 et la résistance R1 qui sert de convertisseur courant-tension pour asservir la tension Vout en fonction de la consigne OR. Pour que la régulation s'effectue correctement, les résistances R1 et R2 doivent compenser les différences d'impédances entre les charges 11 et 12 alimentées. De telles résistances de ballast accroissent les pertes du système.

La figure 2 représente un deuxième exemple classique de convertisseur de puissance destiné à alimenter plusieurs charges. Par rapport au montage de la figure 1, la seule différence réside dans le montage des charges 11 et 12. Dans cet exemple, les deux charges 11 et 12 sont en série avec une résistance R entre la borne 1 et la masse 2, chaque charge étant court-circuitable par un interrupteur K1, K2 commandé par l'un des signaux A1, A2, respectivement. Les deux interrupteurs K1 et K2 sont en série entre la borne 1 et le point milieu 6 reliant la charge 12 à la résistance R.

Par rapport au montage de la figure 1, ce montage présente l'avantage d'avoir une régulation commune pour les deux charges. Par contre, la tension de sortie Vout doit être plus élevée pour permettre une alimentation des deux charges en même temps, ce qui impose un commutateur M plus important.

Un autre inconvénient de ce montage est qu'il engendre une consommation permanente dans la résistance R et interdit donc une fonction d'extinction complète (true shutdown) du système.

Un autre inconvénient est qu'une variation de puissance des charges alimentées n'est pas possible indépendamment l'une de l'autre.

La figure 3 représente un troisième exemple classique de circuit de régulation de puissance destiné à alimenter plusieurs charges. Dans cet exemple, chaque charge 11, 12 est alimentée par un condensateur C1, C2 qui lui est propre. La cathode 1 de la diode D est connectée à chacun des condensateurs C1, C2 par l'intermédiaire d'un interrupteur K1 ou K2, respectivement. Les tensions Vout1 et Vout2 d'alimentation des charges Q1 et Q2 sont respectivement prélevées aux bornes des condensateurs C1 et C2. Le circuit 5' de fourniture du train d'impulsions de commande à l'interrupteur de découpage M reçoit deux signaux d'asservissement FB1 et FB2 prélevés respectivement aux bornes de résistances R1 et R2 reliant chacune des charges 11 et 12 séparément à la masse.

La solution de la figure 3 se rapproche d'une solution consistant à prévoir un convertisseur complet par charge, ce qui n'est pas souhaitable pour des questions d'encombrement.

Ce montage permet une régulation indépendante de chacune des tensions d'alimentation des charges. Toutefois, il nécessite deux condensateurs de sortie du régulateur ainsi que deux boucles complètes de régulation des tensions de sortie. Par ailleurs, les commandes des charges Q1 et Q2 engendrent une gestion complexe de l'énergie stockée dans l'inductance L.

Un autre inconvénient est que les interrupteurs K1 et K2 doivent présenter de faibles résistances à l'état passant afin de ne pas engendrer de dissipation supplémentaire par rapport aux charges 11 et 12 avec lesquelles ils sont en série.

### Résumé de l'invention

La présente invention vise à proposer un convertisseur de puissance de type alimentation à découpage élévateur ou abaisseur de tension qui pallie les inconvénients des solutions connues.

L'invention vise notamment à permettre une régulation indépendante des tensions respectives d'alimentation des charges sans nécessiter plusieurs condensateurs de sortie.

L'invention vise également à permettre que chacune des charges puisse supporter une fonction de variation de puissance.

L'invention vise également à proposer une solution intégrable et compatible avec l'utilisation d'un circuit de génération des trains d'impulsions de commande d'un interrupteur de découpage comportant une seule entrée de consigne de régulation.

Pour atteindre ces objets ainsi que d'autres, la présente invention prévoit un convertisseur de puissance de type alimentation à découpage de fourniture d'une tension à plusieurs charges indépendantes les unes des autres, comportant un circuit de génération d'impulsions de découpage d'une tension continue d'alimentation, et des moyens pour consacrer à chaque charge, dans une période de durée relativement longue par rapport à la durée maximale desdites impulsions de découpage et de durée relativement courte par rapport à la durée de fonctionnement de la charge, au moins une période d'alimentation pendant laquelle ledit circuit régule la tension fournie à la charge considérée.

Selon un mode de réalisation de la présente invention, chaque charge est connectée en série avec un interrupteur entre une première borne de fourniture de la tension de sortie et une borne reliée à la masse par un élément commun de conversion courant-tension.

Selon un mode de réalisation de la présente invention, le convertisseur comporte un circuit de commande desdits interrupteurs pour affecter à chacune des charges ses périodes d'alimentation.

Selon un mode de réalisation de la présente invention, un signal d'asservissement à destination dudit circuit de génération des impulsions de découpage est prélevé aux bornes de l'élément de conversion courant-tension.

Selon un mode de réalisation de la présente invention, un élément limiteur de courant est connecté au point de connexion desdits interrupteurs et de l'élément de conversion courant-tension, un signal d'asservissement à destination dudit circuit de génération des impulsions de découpage étant prélevé aux points milieux respectifs d'associations en série de chaque charge avec l'interrupteur correspondant, et des interrupteurs de synchronisation étant intercalés entre chacun des points de prélèvement et l'entrée correspondante dudit circuit de génération des impulsions de découpage.

Selon un mode de réalisation de la présente invention, les rapports cycliques des périodes d'alimentation de deux charges sont inversés l'un par rapport à l'autre.

Selon un mode de réalisation de la présente invention, les charges à alimenter sont constituées de diodes électroluminescentes en série.

L'invention prévoit également un procédé de partage d'un convertisseur de puissance entre plusieurs charges indépendantes, consistant à consacrer à chacune des charges des créneaux périodiques d'alimentation pendant lesquels le convertisseur de puissance leur est respectivement dédié, la périodicité des créneaux étant choisie en fonction de la durée de rémanence desdites charges.

### Brève description des dessins

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1 à 3 qui ont été décrites précédemment sont destinées à exposer l'état de la technique et le problème posé ;
la figure 4 représente, de façon très schématique et sous forme de blocs, un mode de réalisation d'un convertisseur de puissance selon la présente invention ;
les figures 5A, 5B, 5C et 5D illustrent le fonctionnement du convertisseur de la figure 4 ;
la figure 6 représente un mode de réalisation simplifié d'un élément de sélection du convertisseur de la figure 4 ;
les figures 7A, 7B et 7C illustrent, sous forme de chronogrammes, le fonctionnement de l'élément de la figure 6 ;
la figure 8 représente un mode de réalisation détaillé d'un circuit de commande du convertisseur de puissance de la figure 4 ; et
les figures 9A, 9B, 9C, 9D et 9E illustrent, sous forme de chronogrammes, le fonctionnement du convertisseur de la figure 8.

### Description détaillée

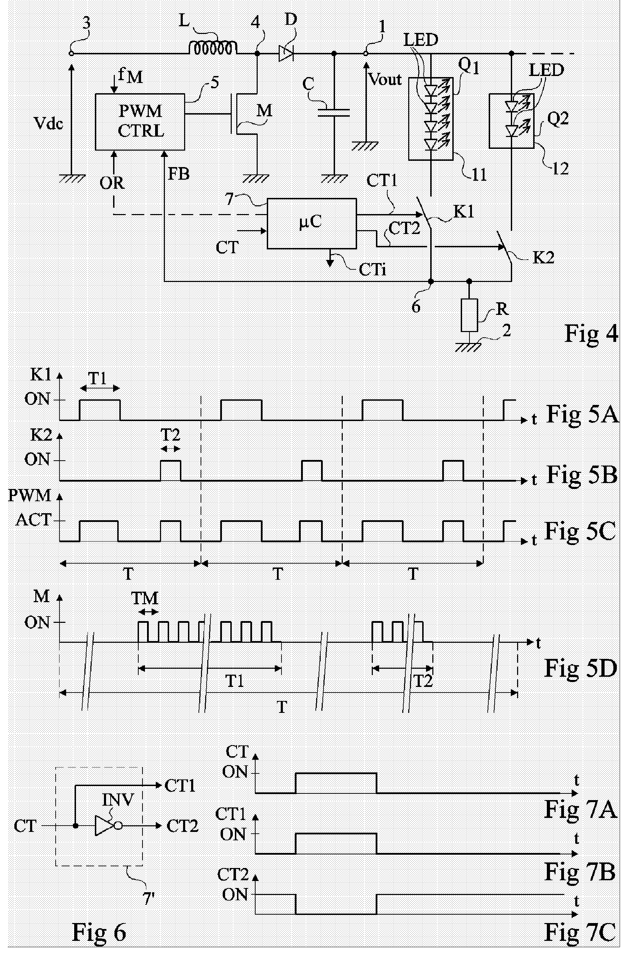

Les mêmes éléments ont été désignés par les mêmes références aux différentes figures et les chronogrammes des figures 5, 7 et 9 ont été tracés sans respect d'échelle. Pour des raisons de clarté, seuls les éléments utiles à la compréhension de l'invention ont été représentés aux figures et seront décrits par la suite. En particulier, les détails constitutifs des circuits de génération de trains d'impulsions de commande des interrupteurs de découpage des convertisseurs représentés n'ont pas été détaillés et ne font pas l'objet de l'invention, celle-ci étant compatible avec l'utilisation de tout circuit de génération de trains d'impulsions classique.

La présente invention sera décrite en relation avec un exemple d'application aux convertisseurs élévateurs de tension. Toutefois, elle s'applique plus généralement à tout convertisseur, qu'il soit élévateur ou abaisseur de tension, le montage de l'élément inductif de l'interrupteur et de la diode bien que différents selon le type de convertisseur n'influant pas sur le fonctionnement de l'invention.

Une caractéristique de la présente invention est de consacrer (d'affecter) à chacune des charges des créneaux temporels périodiques d'alimentation, distincts d'une charge à une autre.

La figure 4 représente, de façon très schématique et sous forme de blocs, un mode de réalisation d'un convertisseur de puissance d'alimentation de deux charges 11 et 12 selon l'invention.

Dans cet exemple, les charges 11 et 12 sont des associations en série de diodes électroluminescentes constituant, par exemple, les éléments de rétroéclairage d'un écran. Par exemple, la charge 11 (Q1) comporte quatre diodes électroluminescentes LED en série tandis que la charge 12 (Q2) n'en comporte que deux.

Le circuit de conversion de puissance proprement dit reprend les mêmes constituants que le circuit classique des figures 1 ou 2. Ainsi, un interrupteur de découpage M est connecté au point milieu 4 d'une association en série d'un élément inductif L avec une diode D entre une borne 3 d'application d'une tension continue d'entrée Vdc et une borne 1 reliée à la masse 2 par un condensateur C de fourniture d'une tension d'alimentation de sortie Vout. Un circuit 5 de fourniture d'impulsions de commande de l'interrupteur de découpage M est similaire au circuit classique décrit en relation avec les figures 1 et 2. Ce circuit 5 comporte essentiellement une entrée de réception d'un signal OR de consigne de la valeur de la tension de sortie souhaitée, une entrée de réception d'un signal FB de régulation et une entrée de réception d'un signal f_{M} d'horloge de fréquence relativement élevée (généralement plusieurs centaines de kilohertz).

Chaque charge 11 ou 12 est connectée en série avec un interrupteur K1 ou K2, respectivement, entre la borne 1 et une première borne 6 d'une résistance R de conversion courant-tension dont l'autre borne est reliée à la masse 2. Le signal FB de contre-réaction est prélevé sur cette borne 6.

Chaque interrupteur est commandé par un signal CT1 ou CT2, respectivement, fourni par un circuit 7 (µC), par exemple, un microcontrôleur. Ce circuit 7 reçoit, par exemple, un ou plusieurs signaux de consigne CT fixant les besoins de commande des charges 11 et 12, et définit les périodes temporelles affectées à chaque charge avec une fréquence relativement faible par rapport à la fréquence relativement élevée de découpage de la tension d'alimentation Vdc.

Les figures 5A, 5B, 5C et 5D illustrent, sous forme de chronogrammes, le fonctionnement d'un convertisseur de puissance tel que représenté en figure 4. La figure 5A illustre les périodes de fermeture (ON) de l'interrupteur K1. La figure 5B illustre les périodes de fermeture (ON) de l'interrupteur K2. La figure 5C illustre les périodes pendant lesquelles le circuit 5 est actif (ACT), c'est-à-dire fournit un train d'impulsions de commande à l'interrupteur M pour réguler la tension de sortie Vout. La figure 5D illustre un exemple de train d'impulsions de fermeture (ON) de l'interrupteur M.

La présente invention tire profit du fait que les charges que le convertisseur doit alimenter (notamment les diodes électroluminescentes) ont un fonctionnement correct, même si elles ne reçoivent pas une tension en permanence. En particulier, pour des diodes, leur éclairement possède une rémanence suffisante pour permettre des périodes d'interruption de leur alimentation. Pour cela, on tient compte de cette rémanence des diodes (ou plus généralement des périodes pendant lesquelles la charge, par exemple un moteur, peut ne pas recevoir temporairement d'alimentation) pour fixer la fréquence (période T, figure 5C) de répétition des périodes T1, respectivement T2, d'alimentation de chacune des charges. Pour que le système fonctionne correctement, une autre condition est que la fréquence (1/T) des périodes d'alimentation respectives des différentes charges soit inférieure à la fréquence f_{M} de commande de l'interrupteur de découpage. Cette condition est illustrée par la figure 5D qui montre que la période T_{M} des impulsions fournies par le circuit 5 est très faible devant la période T de répétition des séquences de commande des charges 11 et 12.

La période T de répétition des périodes T1 et T2 affectées aux charges 11 et 12 est courte devant la durée moyenne d'allumage des charges (au moins quelques secondes dans la cas de diodes de rétroéclairage) et longue devant la durée (la plus longue dans le cas d'une régulation par modulation de fréquence FWM) des impulsions de découpage. Par exemple, la période T est au moins 100 fois supérieure à la durée des impulsions de découpage et au moins 10 fois inférieure à la durée moyenne d'allumage des charges.

Un avantage de l'invention est qu'elle permet une régulation indépendante sur chacune des branches alimentées par le convertisseur.

Un autre avantage qui en découle est que les charges peuvent ainsi être régulées en variation de puissance indépendamment l'une de l'autre. Il suffit de synchroniser la consigne OR avec les périodes T1 et T2. Cette variation de puissance est, par exemple, conditionnée directement par le signal OR fourni au circuit 5 et qui est rendu variable par le microcontrôleur 7 en fonction d'une consigne de puissance qu'il reçoit pour la charge considérée.

Un autre avantage de l'invention, plus particulièrement par rapport au schéma de la figure 2, est qu'elle évite une consommation permanente dans le circuit et permet donc une extinction complète du convertisseur et des charges alimentées (fonction true shutdown).

Un autre avantage de l'invention est qu'elle préserve l'utilisation d'un seul convertisseur de puissance quel que soit le nombre de charges à alimenter. En particulier, comme l'illustre la figure 4, le microcontrôleur 7 peut le cas échéant fournir un ou plusieurs signaux de commande additionnels CTi à d'autres charges. La seule condition est que toutes les charges soient susceptibles d'être alimentées périodiquement avec une fréquence qui soit compatible avec leur "rémanence" et qui soit inférieure à la fréquence de l'alimentation à découpage.

De préférence, les périodes d'alimentation respectives des charges (périodes T1 et T2) ne se chevauchent pas. Par conséquent, au maximum, le rapport cyclique des deux signaux de commande CT1 et CT2 des interrupteurs K1 et K2 est inversé.

Un avantage qui en découle est que l'invention permet d'optimiser la taille de l'interrupteur de découpage M dans la mesure où la tension maximale de sortie correspond à la tension requise par la charge la plus importante.

La figure 6 illustre un mode de réalisation simplifié d'un circuit 7' de fourniture des signaux CT1 et CT2 dans le cas où les périodes affectées aux deux charges 11 et 12 sont complémentaires (par exemple, 60% et 40%, 20% et 80%, etc.). Dans ce cas, le circuit 7' comporte un simple inverseur INV recevant un signal de commande CT en entrée, et fournit deux sorties avec respectivement le signal d'entrée CT reproduit (signal CT1) et ce signal CT inversé (signal CT2).

Les figures 7A, 7B et 7C illustrent par des chronogrammes le fonctionnement du circuit de commande 7'. On y retrouve un exemple de signal de commande CT (figure 7A), le signal CT1 (figure 7B) et le signal CT2 (figure 7C).

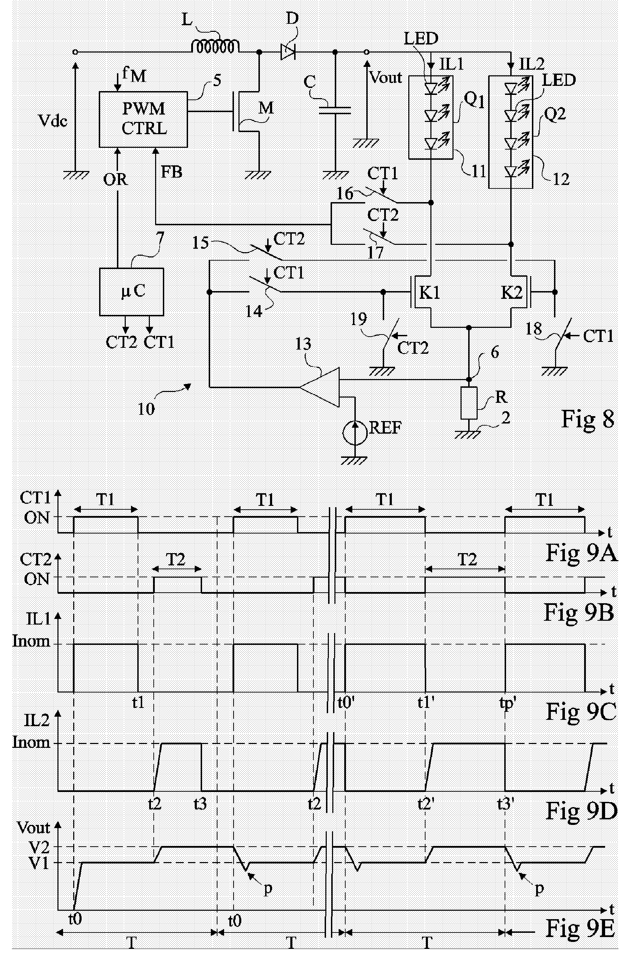

La figure 8 représente un mode de réalisation d'un circuit 10 de synchronisation des interrupteurs K1 et K2 selon un mode de réalisation optionnel de l'invention. On retrouve tous les éléments décrits en relation avec la figure 4, sauf le nombre de diodes électroluminescentes LED des charges (la charge 11 comprend ici trois diodes électroluminescentes LED tandis que la charge 12 en comporte 4).

Dans cet exemple, les interrupteurs K1 et K2 sont constitués de transistors MOS.

Le rôle du circuit 10 est de faire fonctionner les transistors K1 et K2 en mode linéaire pendant la transition d'alimentation d'une charge à l'autre. Pour cela, un élément limiteur de courant 13 reçoit une référence REF sur une première borne tandis que sa deuxième borne est reliée au point 6 de liaison des interrupteurs K1 et K2 à la résistance R. La sortie de l'élément limiteur de courant 13 est reliée aux grilles respectives des interrupteurs K1 et K2 par l'intermédiaire d'interrupteurs 14 et 15 respectivement commandés par les signaux CT1 et CT2.

Selon ce mode de réalisation, le signal FB est prélevé en amont des interrupteurs K1 et K2. Par conséquent, deux interrupteurs 16 et 17 relient respectivement les points d'interconnexion des charges 11 et 12 avec leurs interrupteurs K1 et K2 à la borne d'entrée du signal FB du circuit 5. Les interrupteurs 16 et 17 sont respectivement commandés par les signaux CT1 et CT2. Enfin, deux interrupteurs 18 et 19 relient les grilles respectives des transistors MOS K1 et K2 à la masse 2. L'interrupteur 18 associé au transistor K2 est commandé par le signal CT1 tandis que l'interrupteur 19 associé au transistor K1 est commandé par le signal CT2.

Les figures 9A, 9B, 9C, 9D et 9E illustrent par des chronogrammes le fonctionnement du circuit de la figure 8. La figure 9A illustre les périodes de fermeture (ON) des interrupteurs 14, 16 et 18 commandés par le signal CT1. La figure 9B illustre les périodes de fermeture (ON) des interrupteurs 15, 17 et 19 commandés par le signal CT2. La figure 9C illustre l'allure du courant IL1 dans la charge 11. La figure 9D illustre l'allure du courant IL2 dans la charge 12. La figure 9E illustre l'allure de la tension Vout.

On suppose qu'à un instant t0, le convertisseur de puissance est activé et le microcontrôleur 7 fixe une première période T1 de conduction de la première charge 11. Les interrupteurs 14, 16 et 18 sont fermés tandis que les interrupteurs 15, 17 et 19 sont ouverts. Partant d'un état de décharge, la tension Vout croît depuis zéro jusqu'à atteindre un niveau de tension V1 correspondant à la consigne fournie par le microcontrôleur 7. Le courant IL1 dans la charge croît en même temps jusqu'à atteindre un courant nominal Inom adapté aux diodes électroluminescentes LED. A la fin de la période T1, les interrupteurs 14, 16 et 18 sont ouverts (instant t1). On suppose dans la partie gauche des chronogrammes des figures 9 que les rapports cycliques ne sont pas inversés. Par conséquent, l'instant t2 de début d'alimentation de la charge 12 et de fermeture des interrupteurs 15, 17 et 19 est retardé par rapport à l'instant t1. La charge 12 comprend plus de diodes électroluminescentes que la première, le niveau de tension Vout doit, pour un même courant Inom, être plus élevé (niveau V2) que lors de l'alimentation de la charge 11. En cas de variation de puissance conditionnée par la consigne OR sur le circuit 5, les niveau V1 et V2 sont adaptés en conséquence. Côté courant IL2, la présence de l'élément 13 de limitation de courant évite un pic lié à la fermeture des différents interrupteurs.

On suppose qu'à un instant t3, la période T2 d'alimentation de la deuxième charge s'arrête. Le niveau Vout reste au niveau V2 jusqu'à l'instant t0 suivant de mise en route de la première charge. A cet instant, le niveau Vout descend jusqu'au niveau V1 pendant que le courant IL1 croît dans la première charge. Au voisinage du niveau V1, on assiste à une légère descente du niveau Vout (point p) due à la régulation.

En partie droite des chronogrammes des figures 9, on suppose un rapport cyclique de 50% pour chacune des charges 11 et 12. Les instants t1' (fin des périodes T1) et t2' (début des périodes T2) sont confondus, et les instants t0' (début des périodes T1) et t3' (fin des périodes T2) sont confondus en raison du rapport cyclique de 50%. Comme dans le cas précédent, le limiteur de courant 13 évite les pics de courant aux instants t2'.

Bien entendu, la présente invention est susceptible de diverses variantes et modifications qui apparaîtront à l'homme de l'art. En particulier, bien que l'invention ait été décrite en relation avec un convertisseur élévateur de tension, celle-ci s'applique également sans modifications des commandes à un convertisseur abaisseur. La seule différence réside dans l'étage de conversion lui-même qui reste classique.

De plus, la génération des signaux de commande adaptés au fonctionnement du convertisseur de puissance et des charges commandées est à la portée de l'homme du métier à partir des indications fonctionnelles données ci-dessus et en utilisant des outils classiques.

En outre, plus de deux charges peuvent être commandées indépendamment les unes des autres.

Enfin, dans une même période T, on pourra prévoir, au lieu d'une période respectivement T1 ou T2 pour chaque charge, un nombre de périodes différent d'une charge à une autre. Par exemple, on fixe une durée unitaire d'alimentation de toutes les charges comme un quotient de la période T et on affecte à chaque charge un nombre de durées unitaires en fonction de l'énergie souhaitée pour cette charge.

## Revendications

1. Convertisseur de puissance de type alimentation à découpage de fourniture d'une tension (Vout) à plusieurs charges (11, 12) indépendantes les unes des autres, comportant un circuit (5) de génération d'impulsions de découpage d'une tension continue d'alimentation, **caractérisé en ce qu'**il comporte des moyens pour consacrer à chaque charge, dans une période (T) de durée relativement longue par rapport à la durée maximale desdites impulsions de découpage et de durée relativement courte par rapport à la durée de fonctionnement de la charge, au moins une période (T1, T2) d'alimentation pendant laquelle ledit circuit régule la tension fournie à la charge considérée.

2. Convertisseur selon la revendication 1, dans lequel chaque charge (11, 12) est connectée en série avec un interrupteur (K1, K2) entre une première borne (1) de fourniture de la tension de sortie (Vout) et une borne (6) reliée à la masse (2) par un élément commun de conversion courant-tension (R).

3. Convertisseur selon la revendication 2, comportant un circuit (7) de commande desdits interrupteurs (K1, K2) pour affecter à chacune des charges ses périodes d'alimentation.

4. Convertisseur de puissance selon la revendication 2 ou 3, dans lequel un signal d'asservissement (FB) à destination dudit circuit (5) de génération des impulsions de découpage est prélevé aux bornes de l'élément de conversion courant-tension (R).

5. Convertisseur selon la revendication 2 ou 3, dans lequel un élément limiteur de courant (13) est connecté au point (6) de connexion desdits interrupteurs (K1, K2) et de l'élément de conversion courant-tension, un signal d'asservissement (FB) à destination dudit circuit (5) de génération des impulsions de découpage étant prélevé aux points milieux respectifs d'associations en série de chaque charge (11, 12) avec l'interrupteur correspondant, et des interrupteurs (16, 17) de synchronisation étant intercalés entre chacun des points de prélèvement et l'entrée correspondante dudit circuit (5) de génération des impulsions de découpage.

6. Convertisseur selon l'une quelconque des revendications 1 à 5, dans lequel les rapports cycliques des périodes d'alimentation de deux charges (11, 12) sont inversés l'un par rapport à l'autre.

7. Convertisseur de puissance selon l'une quelconque des revendications 1 à 6, dans lequel les charges (11, 12) à alimenter sont constituées de diodes électroluminescentes en série.

8. Procédé de partage d'un convertisseur de puissance entre plusieurs charges indépendantes, **caractérisé en ce qu'**il consiste à consacrer à chacune des charges des créneaux périodiques d'alimentation pendant lesquels le convertisseur de puissance leur est respectivement dédié, la périodicité des créneaux étant choisie en fonction de la durée de rémanence desdites charges.
